Europäisches Patentamt

(19) European Patent Office

Office européen des brevets

(11) EP 0 757 975 A1

## (12) EUROPEAN PATENT APPLICATION
published in accordance with Art. 158(3) EPC

(43) Date of publication:
12.02.1997 Bulletin 1997/07

(21) Application number: 96903228.3

(22) Date of filing: 23.02.1996

(51) Int. Cl.$^6$: **C06D 5/00**, B60R 21/26

(86) International application number:
PCT/JP96/00423

(87) International publication number:
WO 96/26912 (06.09.1996 Gazette 1996/40)

(84) Designated Contracting States:
DE FR GB GR IT SE

(30) Priority: 27.02.1995 JP 38103/95
09.05.1995 JP 135804/95
29.01.1996 JP 13173/96

(71) Applicant: NIPPON KOKI CO., LTD.
Minato-ku, Tokyo 105 (JP)

(72) Inventors:
• IWAMA, Akira
Kanagawa-ken 227 (JP)
• SHIMODA, Masataka
Kanagawa-ken 229 (JP)
• TSUJIKADO, Nobuo
Kanagawa-ken 231 (JP)

• KAZUMI, Takashi
Nippon Koki Co., Ltd.
Nishisirakawa-gun Fukusima-ken 961 (JP)
• HAYASHI, Minoru
Nippon Koki Co., Ltd.
Nishisirakawa-gun Fukusima-ken 961 (JP)
• KOBAYASHI, Toshiharu
Nippon Koki Co., Ltd.
Nishisirakawa-gun Fukusima-ken 961 (JP)
• KISHIMOTO, Junichi
Nippon Koki Co., Ltd.
Nishisirakawa-gun Fukusima-ken 961 (JP)

(74) Representative: Kern, Wolfgang, Dipl.-Ing. et al
Patentanwälte Kern, Brehm & Partner
Albert-Rosshaupter-Strasse 73
81369 München (DE)

### (54) AIRBAG GAS-GENERATING AGENT AND AIRBAG GAS GENERATOR USING THE SAME

(57) The present invention relates to a gas-generating agent utilizing hydrogen peroxide and an airbag gas generator using the same. The invention aims to completely solve the disadvantages of sodium azide formulations used as an airbag gas-generating agent and to provide the airbag gas generator which has a higher reliability and is cost-effective. Therefore, the gas-generating agent of this invention comprises a main agent comprising an aqueous solution having a hydrogen peroxide content of not more than 64.5 wt% and a boiling point of 127 °C or below, and a catalyst for decomposing hydrogen peroxide. And, the gas generator of this invention comprises a main agent vessel containing a main agent comprising an aqueous solution having a hydrogen peroxide content of not more than 64.5 wt% and a boiling point of 127 °C or below, a decomposition catalyst vessel containing a catalyst for decomposing hydrogen peroxide, and an igniter installed within the decomposition catalyst vessel.

FIG 1

Hydrogen peroxide decomposed gas properties

## Description

### BACKGROUND OF THE INVENTION

#### FIELD OF THE INVENTION

The present invention relates to a gas-generating agent and a gas generator which are used for an airbag to protect a human body from injuries in case of a collision accident or a self-damaging accident in which a driver of an automobile, truck, two-wheeled vehicle, or any other vehicle is unfortunately involved, and more particularly to a gas-generating agent utilizing hydrogen peroxide and an airbag gas generator using the same.

#### BACKGROUND ART

In recent years, the driver s seat and the front passenger seat of a vehicle are provided with an airbag to protect the occupants from an impact in case of a collision of the vehicle. And, a gas generator for deploying the airbag at the collision of the vehicle uses nitrogen gas which is produced by combustion of solid-containing sodium azide as a main ingredient.

Many azide-based compositions for a gas-generating agent are known disclosed in, for example, USP 2,981,616, USP 3,122,462, USP 3,741,585, USP 3,779,823, USP 3,865,660, and USP 3,883,373.

Gas-generating agents not based on azide known is a tetrazole-based composition disclosed in, for example, USP 3,677,841, USP 3,719,604, and USP 5,139,588.

A gas generator which utilizes a gas produced by the combustion of a solid gas-generating agent is configured to have an annular combustion chamber to accommodate the gas-generating agent which surrounds an igniter, and a filter for cooling the gas produced at the combustion and collecting combustion residues which surrounds the combustion chamber with a space therebetween as disclosed in USP 3,985,076. This configuration is also adopted for a cylindrical gas generator which is used for the front passenger seat as disclosed in USP 4,158,696.

USP 3,806,153 discloses a high-pressure inert gas storage type, describing a means that a plunger breaks through a closure of a high-pressure vessel by the pressure of a gas produced by the combustion of a propellant ignited at the collision of a vehicle, and the heated high-pressure gas breaks a rupture disk to supply the gas into the airbag.

USP 3,901,530 discloses a high-pressure inert gas storage type inflator in that a gas produced by the combustion of gunpowder and the high-pressure storage inert gas are mixed in a mixing chamber before being discharged into the airbag.

USP 5,131,680 discloses a mechanism of a high-pressure inert gas storage type inflator in that an operative pin breaks through a storage bulkhead of the high-pressure inert gas by the pressure of a gas produced by the combustion of gunpowder ignited at the collision of a vehicle, the storage gas is first started to be discharged into the airbag, and a detonator for igniting gunpowder used to heat a high-pressure active gas is impacted.

USP 5,384,344 discloses an airbag inflator which utilizes the combustion of a mixed gas of an inert gas, combustion gas and oxidizer gas stored at 500 to 5,000 psi.

USP 5,330,730 discloses an inflator utilizing the combustion of a liquefied gas which can be stored at a relatively low pressure (a critical pressure of 72.7 atm at 36.4 °C for a laughing gas). It describes a piston for stubbing a vessel which stores an oxidizer liquefied gas (laughing) and a fuel liquefied gas (hydrocarbon such as a mixture of normal butane and isobutane), and a combustion chamber where the oxidizer gas and the fuel gas are mixed and burnt. And, USP 3,450,414 discloses a method of deploying an airbag by heating a noncombustible liquefied gas such as Freon-12.

Japanese Patent Laid-Open Print No. Sho 56-88804 discloses a device which breaks a glass container, in which an aqueous solution of 5 to 30 wt% of hydrogen peroxide is sealed in, by means of a breaking body having a wedge-shaped leading end and hydrogen peroxide is chemically decomposed by a decomposition catalyst positioned around the container to produce a gas.

But, the sodium azide formulation has some disadvantages. First, it acts to lower the blood pressure of persons who handle it, the work environment in a mass-production plant is strictly controlled to be safe, and high costs are required when vehicles using it is disposed.

When it burns, sodium oxide and sodium peroxide are by-produced and dispersed though in a small amount, possibly injuring eyes and respiratory organs. Their compound reacts with water and catches fire.

Besides, serious problems include a delay of establishing complete countermeasures against the possibility of catching fire in the production of sodium azide and in mixing and molding processes of its formulations.

Sodium azide is said to be very poisonous if contacted to water or acid, producing hydrogen azide ($HN_3$) having a high explosive sensitivity.

A tetrazole compound is expected as a gas-generating agent in replace of sodium azide, but a danger in its production has not been remedied completely, and its combustion gas contains a cyanogen-based gas even in a very small amount. Other substitute substances also have a disadvantage that carbon monoxide is produced in a large amount.

As described above, there are potential risks in the production and disposing process because of the toxicity sodium azide has.

Accordingly, USP 3,677,841, USP 3,719,604 and USP 5,319,588 have developed tetrazole-based compositions as a gas-generating agent which does not contain sodium azide.

However, because of constraints to keep the gas components produced by the combustion of the solid gas-generating agent innoxious and clean, the generation of solid components (residue) due to the combustion cannot be suppressed.

Therefore, it has become necessary to filtrate the residues from the gas discharged from the inflator, leading to the complex structure and the increased mass. As a result, the cost is increased.

In the sense that the gas discharged from the inflator is innoxious and clean and the complex filtering as in the inflator using the solid gas generator only is not required, high-pressure inert gas storage types disclosed in USP 3,806,153, USP 3,901,530, and USP 5,131,680 are good, but have a disadvantage that they have to be kept at a high pressure of about 3,000 psi after its production to the disposal of a vehicle.

On the point that the pressure has to be kept at a high level, the inflator utilizing the combustion of the mixed gas disclosed in USP 5,438,344 is not different.

And, the inflator utilizing heating and burning of the liquefied gas disclosed in USP 3,450,414 and USP 5,330,730 has a disadvantage that the pressure in the inflator within a vehicle is heavily increased at a temperature of about 100 °C to which the inflator is generally exposed.

The instantaneous gas generating apparatus disclosed in Japanese Patent Laid-Open Print No. Sho 56-88804 is promising in view of cleaning of the gas discharged from the above inflator and eliminating the necessity of storage at a high pressure.

This is to solve the disadvantages of the sodium azide formulations which are used as the above-described airbag gas-generating agent.

Meantime, since the airbag is installed in an automobile, it is required and inevitable to keep the same performance under severe environments where the automobile is placed. In other words, it is required to insure the performance in a range of -30 °C at a low temperature and 80 °C at a high temperature.

On the other hand, hydrogen peroxide which is used as the gas-generating agent has its physical properties changed depending on its concentration, namely a boiling point and a freezing point are changed. Therefore, since the aqueous solution having a hydrogen peroxide content of 5 to 30 wt% disclosed in Japanese Patent Laid-Open Print No. Sho 56-88804 has a problem of being frozen in a low-thermal environment, and a gas generating capacity at a low temperature is lost.

And, the airbag gas generator has an object of inflating the bag. This airbag is required to completely deploy in about 30 to 40 msec after a collision. Therefore, the gas-generating agent utilizing the aqueous solution of hydrogen peroxide has to complete the decomposition reaction in 30 to 40 msec.

On the other hand, hydrogen peroxide has a property of changing the decomposition rate depending on its concentration. The concentration of hydrogen peroxide is a parameter of its decomposition reaction, and its decomposition rate is increased as its concentration is increased. Thus, with the hydrogen peroxide content of 5 wt% to 30 wt% disclosed in Japanese Patent Laid-Open Print No. Sho 56-88804, it is impossible to complete the decomposition reaction in 30 to 40 msec.

Therefore, since the invention disclosed in Japanese Patent Laid-Open Print No. Sho 56-88804 is limited to describe that an expansion coefficient of 80% can be attained in 30 seconds, indicating that it cannot be used at all as the airbag gas generator for automobiles. Namely, to protect the occupant by deploying the airbag of the automobile, the decomposition reaction has to be completed in at least 50 msec to generate a gas and to deploy the airbag 100%.

## SUMMARY OF THE INVENTION

The present invention has been completed to remedy the above-described disadvantages, and aims to provide an airbag gas-generating agent which can completely solve the disadvantages of sodium azide formulations used as an airbag gas-generating agent and a gas generator using the same.

The present invention also aims to provide an airbag gas generator which has a higher reliability and is cost-effective.

An airbag gas-generating agent of the invention comprises a main agent which is an aqueous solution having a hydrogen peroxide content of 64.5 wt% or below and a boiling point of 127 °C or below and a decomposition catalyst for hydrogen peroxide.

The airbag gas-generating agent according to the invention has the main agent which is an aqueous solution having a hydrogen peroxide content of 35 wt% to 64.5 wt%.

The airbag gas-generating agent according to the invention has the main agent which is an aqueous solution having a hydrogen peroxide content of 40 wt% to 60 wt%.

The airbag gas-generating agent according to the invention has the decomposition catalyst for hydrogen peroxide which is permanganate of alkali metal or alkaline earth metal; chromate of alkali metal, gold, platinum, silver or copper; lanthanoid-based oxide; gold power, platinum powder, silver powder; or copper powder.

An airbag gas generator of the invention comprises a main agent vessel accommodating a main agent which is an aqueous solution having a hydrogen peroxide content of 64.5 wt% or below and a boiling point of 127 °C or below, a decomposition catalyst vessel accommodating a decomposition catalyst for hydrogen peroxide, and an igniter installed within the decomposition catalyst vessel.

An airbag gas generator of the invention comprises a main agent vessel accommodating a main agent which is an aqueous solution having a hydrogen peroxide content of 64.5 wt% or below and a boiling point of 127 °C or below, a decomposition catalyst vessel accommodating a decomposition catalyst for hydrogen peroxide, an igniter installed within the decomposition catalyst vessel, and a gas generator body which has the igniter, the decomposition catalyst vessel and the main agent vessel in this order and a gas exhaust section provided at the upper part of the main agent vessel.

The airbag gas generator according to the invention has the main agent which is an aqueous solution having a hydrogen peroxide content of 35 wt% to 64.5 wt%.

The airbag gas generator according to the invention has the main agent which is an aqueous solution having a hydrogen peroxide content of 40 wt% to 60 wt%.

The airbag gas generator according to the invention has the decomposition catalyst for hydrogen peroxide which is permanganate of alkali metal or alkaline earth metal; chromate of alkali metal, gold, platinum, silver or copper; lanthanoid-based oxide; gold powder, platinum powder, silver powder; or copper powder.

The airbag gas generator according to the invention has the igniter which comprises a heating element and gunpowder attached to the heating element.

The airbag gas generator according to the invention has a pressure member having exhaust nozzles which is disposed between the main agent vessel and the gas exhaust section.

An airbag gas generator utilizing decomposition of a liquid of the invention comprises a high-pressure vessel having gas exhaust ports to the airbag formed on its wall, a concealed vessel with a decomposable liquid concealed in it, a decomposition accelerating substance discharging means, and an igniter, wherein the concealed vessel, the decomposition accelerating substance discharging means and the igniter are positioned in the high-pressure vessel, and a decomposition reaction chamber is positioned between the concealed vessel and the gas exhaust ports.

An airbag gas generator utilizing decomposition of a liquid of the invention comprises a high-pressure vessel having gas exhaust ports to the airbag formed on its wall, a concealed vessel with a decomposable liquid concealed in it, a decomposition accelerating substance discharging means, a rupture disk which is disposed between the concealed vessel and the decomposition accelerating substance discharging means, and an igniter, wherein the concealed vessel, the rupture disk, the decomposition accelerating substance discharging means and the igniter are positioned in the high-pressure vessel, and a decomposition reaction chamber is positioned between the concealed vessel and the gas exhaust ports via the rupture disk.

An airbag gas generator utilizing decomposition of a liquid of the invention comprises a bottom-closed high-pressure vessel having gas exhaust ports to the airbag formed on its wall on the side of an open end, a concealed vessel with a decomposable liquid concealed in it, a decomposition accelerating substance discharging means, a rupture disk which is disposed between the concealed vessel and the decomposition accelerating substance discharging means, an igniter, a partition member which has gas passages and a space in which the decomposition accelerating substance discharging means and the igniter are placed, and an end cap which is provided on the open side of the high-pressure vessel, wherein the high-pressure vessel has the concealed vessel, the rupture disk, the partition member, the decomposition accelerating substance discharging means, the igniter and the end cap, a decomposition reaction chamber is formed between the gas passages and the gas exhaust ports via the rupture disk, and the open end of the high-pressure vessel is fixed with the end cap.

An airbag gas generator utilizing decomposition of a liquid of the invention comprises a bottom-closed high-pressure vessel having gas exhaust ports to the airbag formed on its wall on the side of the bottom, a decomposition reaction chamber formed on the side of the bottom of the high-pressure vessel, a concealed vessel with a decomposable liquid concealed in it, a rupture disk provided between the decomposition reaction chamber and the concealed vessel, a decomposition accelerating substance discharging means, an igniter, a partition member which separates the decomposition accelerating substance discharging means and the igniter from the concealed vessel, and an end cap which is provided on the open side of the high-pressure vessel, wherein the high-pressure vessel has the rupture disk, the concealed vessel, the partition member, the decomposition accelerating substance discharging means, the igniter and the end cap, and the open end of the high-pressure vessel is fixed with the end cap.

The airbag gas generator according to the invention has the high-pressure vessel which is aluminum, stainless steel or fiberglass reinforced plastics.

The airbag gas generator according to the invention has the decomposable liquid which is an aqueous solution of hydrogen peroxide or an aqueous solution of hydroxyl group ammonium nitrate.

The airbag gas generator according to the invention has the aqueous solution of hydrogen peroxide which is an aqueous solution of 35 wt% to 64.5 wt% of hydrogen peroxide.

The airbag gas generator according to the invention has the decomposition accelerating substance which is per metalate of alkali metal or alkaline earth metal; metalate of alkali metal, gold, platinum, silver or copper; lanthanoid-based oxide; gold powder; platinum powder; silver powder; or copper powder.

The airbag gas generator according to the invention has the permetalate of alkali metal which is potassium permanganate.

The airbag gas generator according to the invention has the decomposition reaction chamber which has a mesh structure made of a wire rod for decomposing the decomposable liquid.

The airbag gas generator according to the invention has the wire rod which is palladium, gold, platinum, silver, copper, iron or stainless steel.

The airbag gas generator according to the invention has the wire rod which is coated with the decomposition accelerating substance.

The airbag gas generator according to the invention has the decomposition accelerating substance discharging means which contains the decomposition accelerating substance and the discharging agent.

The airbag gas generator according to the invention has the decomposition accelerating substance discharging means which has a metallic projectile.

The airbag gas generator according to the invention has the metallic projectile which has a gimlet-shaped end and its slope has a concave shape.

The airbag gas generator according to the invention has the concealed vessel which is aluminum, titanium, stainless steel, or synthetic resin containing fluorine resin.

The airbag gas generator according to the invention has the concealed vessel which has the inner surface coated with fluorine resin.

The airbag gas generator according to the invention has the decomposable liquid in the concealed vessel which is at least 50% of the inner volume of the concealed vessel.

Now, the aqueous solution of hydrogen peroxide to be used as the decomposable liquid will be described.

Hydrogen peroxide has decomposition heat which is very high as shown below, but the aqueous solution having a hydrogen peroxide content of 64.5 wt% or below does not result in evaporating completely, so that a run away reaction does not take place.

$$H_2O_2 \rightarrow H_2O + 0.5O_2 + 98.2KJ$$

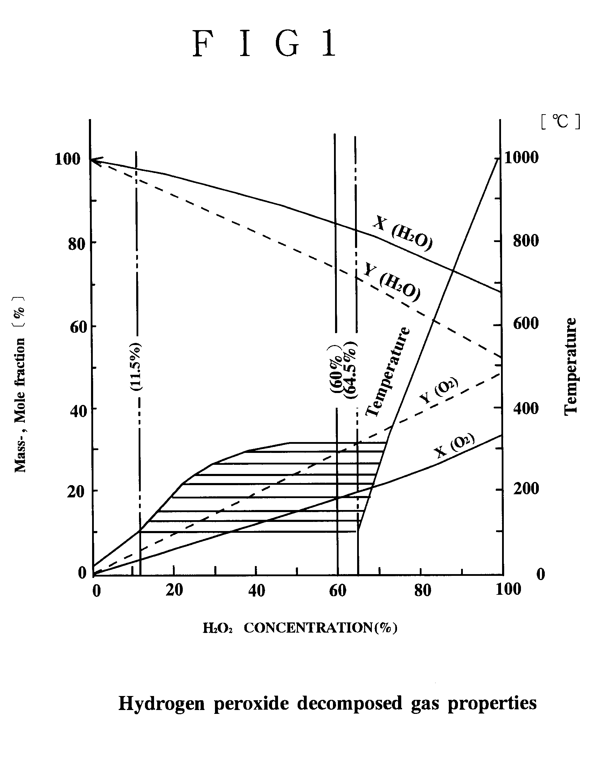

Fig. 1 shows changes in the generated gas composition and temperature with respect to the concentration of an aqueous solution of hydrogen peroxide.

In the figure, $X(H_2O)$ and $X(O_2)$ indicated by a solid line show the molar concentration of a decomposition gas at each concentration, and $Y(H_2O)$ and $Y(O_2)$ show the concentration in volume percentage.

And, the conditions of gas during decomposition can be seen from the concentration of the aqueous solution of hydrogen peroxide shown in the figure. Specifically, when the hydrogen peroxide content is 11.5 wt% or below, the liquid retains its state without being vaporized by heating. And, when the hydrogen peroxide content is 64.5 wt% or more, it is seen that water changes to heated steam and the decomposition gas temperature rises quickly. For example, when the hydrogen peroxide content is 100 wt%, the decomposition gas temperature becomes around 1000 °C.

But, when the hydrogen peroxide content is in a range of 11.5 wt% to 64.5 wt%, the aqueous solution is present in a state of saturated steam. For example, under atmospheric pressure, a temperature is suppressed by the high latent heat of vaporization of water, so that the decomposition gas temperature of the aqueous solution of hydrogen peroxide tops off at 100 °C (saturated steam temperature). And, it is seen from Fig. 1 that the decomposition gas temperature is suppressed at about 200 °C even under pressure of 10 atm.

When the hydrogen peroxide content is 60 wt%, it is seen that a clean gas having almost the same compositions as air is produced because the decomposition gas composition is limited to steam containing 18 wt% of oxygen and a small amount of water in the form of a liquid.

And, since a pressure for deploying the airbag is atmospheric pressure plus about 1 atm, the gas temperature is suppressed to 110 °C or below. Therefore, there is no possibility of burning a bag material by the decomposition product unlike another gas-generating agent, and it is characterized in that no flame is produced.

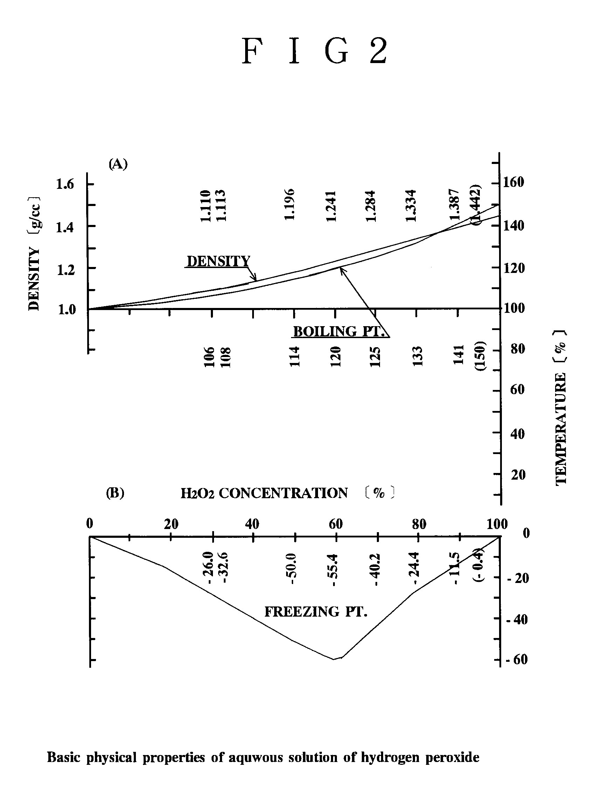

Fig. 2 shows basic physical properties of the aqueous solution of hydrogen peroxide.

In the figure, (A) shows the boiling point and specific gravity at each density, and (B) shows changes in concentration and freezing point of the aqueous solution of hydrogen peroxide.

It is seen from (B) that the freezing point is minimum when the hydrogen peroxide content is 60 wt%.

The inflator is required to retain prescribed performance even in a very low-thermal environment where a vehicle is placed. Therefore, it is necessary to avoid a trouble that the aqueous solution of hydrogen peroxide is frozen in a very low-thermal environment.

However, Fig. 2 (B) shows that freezing does not occur at a low-thermal environment requirement value of -30 °C.

Fig. 2 (B) has the concentration of hydrogen peroxide on the horizontal axis and the temperature on the vertical axis, and the curve results from connecting the freezing points at respective contents. And, the numerical values in the figure show the freezing points at typical contents.

It is seen from the figure that when the hydrogen peroxide content is 60 wt%, the freezing point is as low as -55.4 °C. This means that the aqueous solution having the hydrogen peroxide content of 60 wt% does not freeze in an environment at -55.4 °C or higher.

And, the freezing point of hydrogen peroxide is minimum when its content is 60 wt%, but it will increase if its content is changed to a higher concentration or lower concentration. For example, the freezing point is -50.0 °C when the hydrogen peroxide content is 50 wt%, the freezing point is -40.2 °C when it is 70 wt%, and the freezing point is -32.6 °C when it is 35 wt%.

Therefore, to meet the low-thermal environment requirement value of -30 °C, the hydrogen peroxide content has to be 35 wt% or more to avoid a freezing problem. In view of the above, the hydrogen peroxide content is 35 wt% to 64.5 wt%, preferably 40 wt% to 60 wt%.

Furthermore, when the hydrogen peroxide content is in a range of 11.5 wt% to 30 wt%, it is known that the primary object of producing a gas cannot be achieved by hydrogen peroxide in a low-thermal environment.

And, Fig. 2 (A) shows a boiling point of 120 °C which is a trouble-free value when the hydrogen peroxide content is 60 wt% with respect to the high-thermal environment requirement value of +80 °C.

It indicates that the aqueous solution of hydrogen peroxide has a sufficient allowable range with respect to the environment temperature of the inflator.

Thus, hydrogen peroxide in an intermediate concentration used for an airbag in this invention can secure a high safety when it is stored in a concealed state and placed in an environment where its concentration is prevented from being increased.

As described above, to protect the occupant by deploying the automobile airbag, the decomposition reaction must be completed within at least 50 msec to produce a gas and to inflate the airbag 100%. The present invention is characterized by providing this decomposition rate. Specifically, as the catalyst for decomposing hydrogen peroxide, permanganate of alkali metal or alkaline earth metal; chromate of alkali metal, gold, platinum, silver or copper; lanthanoid-based oxide; gold powder; platinum powder; silver powder; or copper powder is selected, it is mixed with gunpowder which is called an igniting agent or priming charge, and this decomposition catalyst is dispersed into hydrogen peroxide within a few msec by a decomposition reaction of gunpowder at a speed close to a subsonic speed. The decomposition can be completed within 50 msec by virtue of the combustion heat of gunpowder and the dispersion rate of the decomposition catalyst.

This enables to produce a gas at a rate of 100 times faster than the gas production rate of the gas generator disclosed in Japanese Patent Laid-Open Publication No. Sho 56-88804, indicating an essential difference in view of a print speed.

Hydrogen peroxide is decomposed by about 0.5 wt% a year at room temperature even if stored in a vessel which is made of a specified appropriate material (high purity aluminum or stainless steel such as SUS304, 304L, 316, or 316L) unless a special decomposition preventing agent is added. To prevent the pressure increase within the vessel due to the above reason, it is inevitable to install a miniature size oxygen absorption bed bath. But, this does not mean that a module is made complex or large, because it can contain 55 ml of an aqueous solution of 60 wt% of hydrogen peroxide required to inflate a 60-liter airbag within a very short time of 30 to 200 msec after receiving the signal from an acceleration sensor which detects a collision accident or self-damaging accident, or only 140 ml of it to inflate a 150-liter airbag , and a volume occupied by a 200-500 ml oxygen absorption bead bath.

The required oxygen absorption capacity with respect to the bed is 13.5 liters at normal temperature for a 55-ml module, and 31 liters for a 140-ml module. The oxygen volume at such levels can be sufficiently treated by charging 70 to 200g of a commercial oxygen absorbing agent to the bed because the aqueous solution of hydrogen peroxide with the intermediate concentration has a very low decomposition rate of 0.5 wt% per year as described above.

In this invention, when a vehicle causes a collision, a current flows through the igniter according to the signal from the collision detecting sensor installed in the vehicle, and the igniter is activated.

The combustion of the igniting agent contained in the igniter produces a high temperature gas from the igniter.

This high temperature gas ignites the discharging agent provided within the decomposition accelerating substance (catalyst) discharging means. The pressure of the high-temperature gas produced by the combustion of the discharging agent partly breaks the concealed vessel to release the decomposition accelerating substance (catalyst) for the gas generating agent at a high speed into the gas generating agent. The released decomposition accelerating substance (catalyst) is vigorously stirred by the pressure of the gas produced by the combustion of the discharging agent, and the decomposable liquid (gas generating agent) is contacted to the decomposition accelerating substance (catalyst) and decomposed.

In the structure that the metallic projectile is provided between the concealed vessel for the decomposable liquid and the decomposition accelerating substance (catalyst), the metallic projectile provided with a motion energy by the gas produced by the combustion of the discharging agent breaks through the concealed vessel, and moves through the decomposable liquid at a high speed. The decomposition reaction is accelerated by stirring performed more effectively because of turbulent flow caused behind the passage of the metallic projectile, providing a preferable function for the concealed vessel with a larger diameter.

Particularly, when the gimlet-shaped slope from the end of the metallic projectile has a concave shape, the stirring effect is remarkably effective to promote the decomposition reaction.

The decomposable liquid is decomposed by heat from the decomposition accelerating substance (catalyst) and the discharging agent, and when the pressure in the concealed vessel reaches a prescribed value, the concealed vessel and the rupture disk are broken to let the decomposition product gas flow into the decomposition reaction chamber. Unreacted production gas is completely decomposed while flowing through the decomposition reaction chamber, and the gas is supplied into the airbag through the gas exhaust ports formed on the side wall of the high-pressure vessel.

Within the decomposition reaction chamber, the mesh structure made of the decomposition accelerating substance (catalyst) or coated with the decomposition accelerating substance (catalyst) can be provided to complete the decomposition and filtrate solid products and fragments of the rupture disk produced within the gas generator.

## BRIEF DESCRIPTION OF THE DRAWINGS

Fig. 1 is a graph showing changes in the generated gas composition and temperature with respect to the concentration of an aqueous solution of hydrogen peroxide.

Fig. 2 is a graph showing the basic properties of an aqueous solution of hydrogen peroxide.

Fig. 3 is a sectional view showing an airbag gas generator according to Example 1.

Fig. 4 is a graph showing the pressure and temperature curves of a gas generated from the airbag gas generator according to Example 1.

Fig. 5 is a graph showing the result of a pressure increase test (-30 °C) at each concentration of the airbag gas generator according to Example 2.

Fig. 6 is a sectional view showing the airbag gas generator according to Example 3.

Fig. 7 is a plan view of the airbag gas generator according to Example 3.

Fig. 8 is a perspective view of a pressure cap of the airbag gas generator according to Example 3.

Fig. 9 is a diagram based on a photograph of the deployed bag in Example 4, showing a state in 20 msec after the deployment started.

Fig. 10 is a diagram based on a photograph of the deployed bag in Example 4, showing a state in 24 msec after the deployment started.

Fig. 11 is a diagram based on a photograph of the deployed bag in Example 4, showing a state in 32 msec after the deployment started.

Fig. 12 is a diagram based on a photograph of the deployed bag in Example 4, showing a state in 40 msec after the deployment started.

Fig. 13 is a diagram based on a photograph of the deployed bag in Example 4, showing a state in 48 msec after the deployment started.

Fig. 14 is a diagram based on a photograph of the deployed bag in Example 4, showing a state in 56 msec after the deployment started.

Fig. 15 is a diagram based on a photograph of the deployed bag in Example 4, showing a state in 64 msec after the deployment started.

Fig. 16 is a diagram based on a photograph of the deployed bag in Example 4, showing a state in 82 msec after the deployment started.

Fig. 17 is a sectional view showing the airbag gas generator according to Example 5.

Fig. 18 is a perspective view showing a partition member of the airbag gas generator according to Example 5.

Fig. 19 is a sectional view showing the airbag gas generator according to Example 6.

Fig. 20 is a sectional view showing the airbag gas generator according to Example 7.

Fig. 21 is an exploded explanatory diagram showing the relation among a decomposition accelerating substance (catalyst) discharging means, a metallic projectile and an igniter of the airbag gas generator according to Example 7.

Fig. 22 is a sectional view showing the airbag gas generator according to Example 8.

Fig. 23 is a schematic explanatory diagram showing an airbag gas generator X according to the present invention mounted on a steering wheel Y of an automobile.

Fig. 24 is a diagram showing pressures and times of the gases generated in Example 10 and Example 11.

## BEST MODE FOR CARRYING OUT THE INVENTION

Example 1:

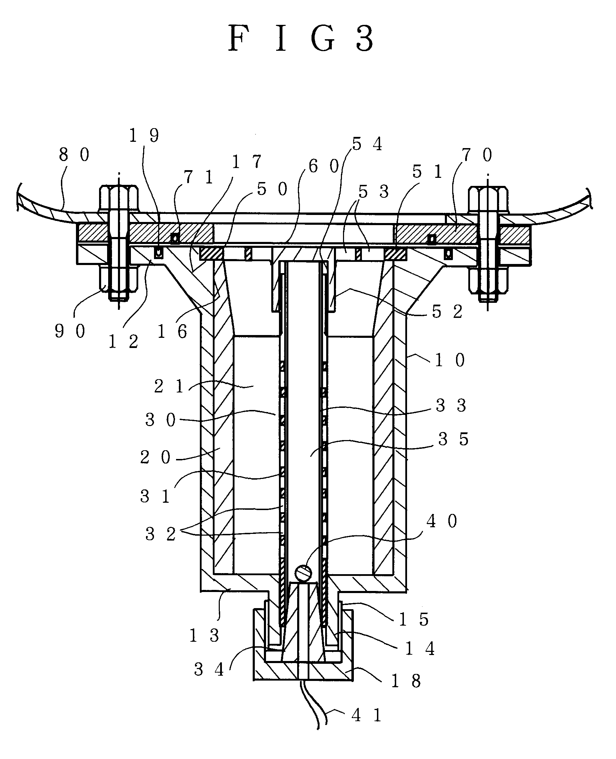

Fig. 3 shows an airbag gas generator according to this example.

In the figure, 10 denotes an external cylinder. The external cylinder 10 is made of, for example, aluminum of JIS A2017, and has a bottom-closed cylinder 11 and a flange 12.

The bottom-closed cylinder 11 of the external cylinder 10 has an externally protruded cylindrical protrusion 14 formed on its bottom 13. A male thread 15 is formed on the circumference of the protrusion 14. A cap 18 is threaded onto the male thread 15.

Within the cylinder 11 of the external cylinder 10, a cylindrical spacer 20 for adjusting a capacity is fitted. The interior of this spacer 20 forms a main agent vessel 21. The spacer 20 is made of, for example, aluminum of JIS A2017.

At the center of the spacer 20 in the cylinder 11 of the external cylinder 10, a decomposition catalyst vessel 30 is fitted to have the cylindrical protrusion 14 fitted.

The decomposition catalyst vessel 30 comprises an inner cylinder 31, an insert cylinder 33, and a plug 34.

The inner cylinder 31 is made of, for example, SUS 304 and provided with many small holes 32.

The insert cylinder 33 is made of, for example, polymethyl methacrylate. The plug 34 is made of, for example, silicone rubber.

The plug 34 is provided with an igniter 40.

The igniter 40 comprises a heating element which generates heat by flowing a current, to which gunpowder or the like is contacted. This heating element is a nichrome wire, a thin film resistor or the like. And, the gunpowder or the like includes black powder, lead rhodanate, tricinate and the like.

The igniter 40 has a cord 41 connected and is ignited through the cord 41 by an activation command based on a signal from an acceleration sensor which detects a collision accident or a self-damaging accident.

A catalyst 35 for decomposing hydrogen peroxide is charged into the decomposition catalyst vessel 30. This catalyst 35 for decomposing hydrogen peroxide is permanganate of alkali metal or alkaline earth metal; chromate of alkali metal, gold, platinum, silver or copper; lanthanoid-based oxide; gold powder; platinum powder; silver powder; or copper powder.

The upper part of the decomposition catalyst vessel 30 is fixed to the inside of a cylindrical part 52 of a partition plate 50 via an O-ring 54.

The partition plate 50 is made of aluminum of JIS A2017 and has a disk body 51, the cylindrical part 52 provided at its center, and many small holes 53.

The partition plate 50 is placed on an annular recess 17 formed on the circumference of an opening 16 of the external cylinder 10.

An annular pressure plate 70 is placed on the partition plate 50 via a thin plate 60.

The thin plate 60 is made of, for example, resin such as nylon or aluminum. And, the pressure plate 70 is made of, for example, aluminum of JIS A2017.

And, O-rings 19, 71 for preventing gas leak are attached to the flange 12 and the pressure plate 70, respectively.

Besides, an airbag 80 is attached to the pressure plate 70 with bolts and nuts 90.

Now, assembling of the airbag gas generator according to this Example will be described.

First, the inner cylinder 31 which has the insert cylinder 33 inserted therein is fitted into the cylindrical protrusion 14 of the cylinder 11 of the external cylinder 10. Then, the plug 34 to which the igniter 40 is attached is fitted to the insert cylinder 33. And, the cap 18 is threaded onto the protrusion 14. Thus, the decomposition catalyst vessel 30 can be attached to the external cylinder 10. Here, 0.1g of black powder was used as an igniting agent of the igniter 40. The black powder is also given a role of quickly dispersing the decomposition catalyst into the aqueous solution of hydrogen peroxide.

Then, about 0.8g of potassium permanganate-based decomposition catalyst 35 is charged into the decomposition catalyst vessel 30.

Next, the cylindrical spacer 20 for adjusting a capacity is fitted into the cylinder 11 of the external cylinder 10 to form the vessel 21 for a material, and 55 ml of an aqueous solution of 60 wt% of hydrogen peroxide is charged therein.

And, the upper part of the decomposition catalyst vessel 30 is fixed to the inside of the cylindrical part 52 of the partition plate 50 via the O-ring 54, and the top of the vessel 21 for a main agent is covered.

Besides, the pressure plate 70 is placed on the partition plate 50 through the thin plate 60 and integrally fixed to the airbag 80 with the bolts and nuts 90.

Accordingly, the airbag gas generator shown in Fig. 3 is completely assembled.

Now, the operation of this airbag gas generator will be described.

Generally, since the main agent vessel 21 has the small holes 53 of the partition plate 60 closed by the thin plate 60, nothing leaks outside. On the other hand, the decomposition catalyst vessel 30 is also sealed by the cylindrical part 52 of the partition plate 50 through the O-ring 54, and nothing leaks into the main agent vessel 21.

Therefore, in an ordinary state, the main agent and the decomposition catalyst are not contacted mutually.

Besides, since the decomposition catalyst vessel 30 has its bottom end fitted into the cylindrical protrusion 14 of the external cylinder 10 and supported and fixed by the cap 18 through the plug 34 and has the top end supported and fixed to the inside of the cylindrical part 52 of the partition plate 50 through the O-ring 54, it is stably held within the external cylinder 10.

Accordingly, when the igniter 40 is ignited through the cord 41 by the activation command based on the signal from the acceleration sensor which detects a collision accident or a self-damaging accident, the insert cylinder 33 of the decomposition catalyst vessel 30 is broken by the ignition of the igniter 40, and the decomposition catalyst 35 in the decomposition catalyst vessel 30 is dispersed into the aqueous solution of hydrogen peroxide in the main agent vessel 21 through the many small holes 32 formed on the cylinder body 31.

The dispersed decomposition catalyst 35 starts to decompose hydrogen peroxide to generate water and oxygen gas. The generated oxygen gas breaks the thin plate 60 which covers the many small holes 53 of the partition plate 50 to enter the airbag 80.

Thus, the airbag 80 is inflated.

The decomposition rate of hydrogen peroxide is controlled by the type and amount of the igniting agent, and the type, particle size and dispersion efficiency into the solution of the decomposition catalyst.

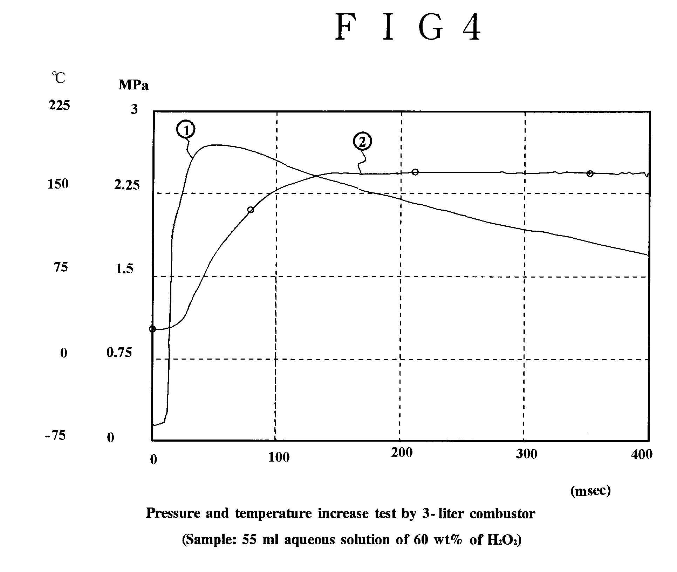

Fig. 4 shows the pressure and temperature curves of the gas generated in this Example.

In the drawing, ① indicates a pressure and ② a temperature.

It is obvious from the pressure curve ① that in the obtained data, the pressure reached maximum in about 50 msec after sending an ignition signal and the maximum pressure become 2.5 MPa.

On the other hand, it is apparent from the temperature curve ② that in the obtained data, the maximum temperature reached about 200 °C in about 150 msec after sending the ignition signal.

It was ascertained from the above that 55 ml of the aqueous solution of 60 wt% of hydrogen peroxide was a sufficient amount to quickly inflate a 60-liter airbag.

The above Example described has used 55 ml of the aqueous solution of 60 wt% of hydrogen peroxide, but it is obvious from the above description of the operation that the present invention is not limited to the above case.

And, the spacer 20 was fitted to the inside of the external cylinder 10 in the above description, but the spacer can be omitted when the external cylinder has a capacity suitable for a purpose.

Example 2:

Using the airbag gas generator shown in Fig. 3, the output property of a pressure in a thermal environment was checked. The gas generator and its assembling method are quite the same with those in Example 1.

This Example used an aqueous solution of 30 wt% of hydrogen peroxide and an aqueous solution of 60 wt% of hydrogen peroxide. The gas generator assembled by the assembling method described in Example 1 was left in a cryostat at -30 °C. After leaving it as it was for 4 hours or more, the assembly was removed and subjected to a pressure increase test within 5 minutes after removing.

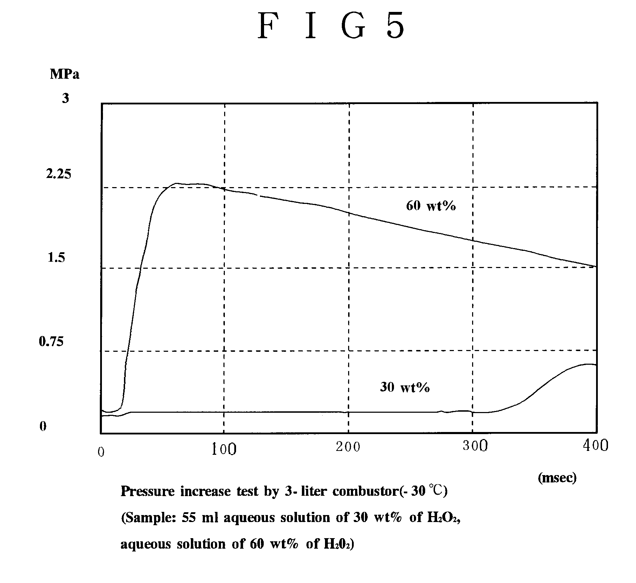

Fig. 5 shows the results of pressure increase tests at respective concentrations.

It is apparent from the results that in a low thermal environment of -30 °C, the aqueous solution having a hydrogen peroxide content of 60 wt% can output a tank pressure equivalent to the one at normal temperature.

On the other hand, the aqueous solution of 30 wt% of hydrogen peroxide started to exert a pressure in about 300 msec, showing that it did not have performance as an airbag gas generator at a low temperature.

As apparent from the above-described operations, this result shows that the applicable range is limited to the aqueous solution having a hydrogen peroxide content of at least 35 wt%.

Example 3:

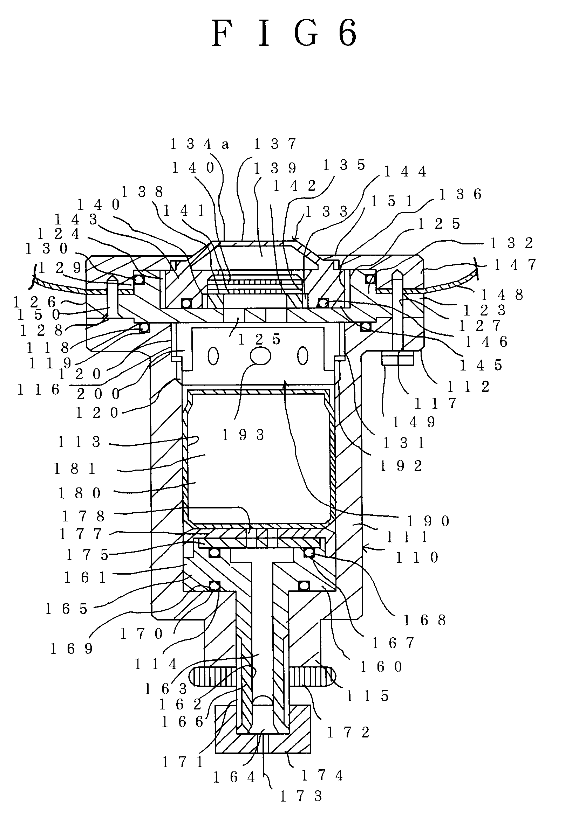

Fig. 6 shows the airbag gas generator according to this Example.

In the figure, 110 denotes a gas generator body.

The gas generator body 110 is made of, for example, stainless steel of SUS 304, and has an external cylinder 111 having a flange 112, a head metal fitting 123 which is fitted to the flange 112 of the external cylinder 111 to close the opening of the external cylinder 111, and a top metal fitting 133 which is threaded into a recess 124 of the head metal fitting 123.

The external cylinder 111 integrally has the annular flange 112 at the upper part, a shoulder 114 at the lower part, and a cylindrical member 115 which is protruded downward from the shoulder 114. The flange 112 is provided with bolt holes 117 and an annular groove 118 for receiving a sealing member 119 such as an O-ring.

And, an open end 116 of an inner wall 113 of the external cylinder 111 is provided with a housing section 120 in which the exterior of an annular protrusion 131 of the head metal fitting 123 is fitted. At the lower part of the housing section 120, a female thread 121 is formed to thread on a head holding cap 190 to be described afterward.

The head metal fitting 123 has at its center the cylindrical recess 124 which has a plurality of nozzles 125 formed on the bottom.

The recess 124 is provided with a female thread 132a to thread on the top metal fitting 133.

An annular wall 132 on the circumference of the recess 124 is integrally formed with an annular flange 126 which has the same outer diameter with the flange 112 of the external cylinder 111. The flange 126 is provided with bolt holes 127 and screw holes 128.

The annular wall 132 on the circumference of the recess 124 is provided at a position higher than the flange 126 with an annular groove 129 in which a sealing member 130 such as an O-ring is fitted.

The annular protrusion 131 for positioning is provided on the surface opposite to the recess 124.

The top metal fitting 133 has a cylindrical body 134, a conical gas exhaust section 134a disposed at the top of the body 134, a through hole 135 disposed at the center of the body 134, and a male thread 136 formed on the circumference of the body 134.

The gas exhaust section 134a comprises a roof section 137 which is conically protruded from the upper part of the body 134 and a nozzle section 138 having a plurality of small holes formed on the inclined surface of the roof section 137. The nozzle section 138 is angled to relieve the impact of an airbag 148 in a vertical direction.

And, a space 139 is provided between the as exhaust section 134a and the through hole 135.

The through hole 135 is provided with a porous plate 140, gauze 141 made of copper or the like, another porous plate 140 and a cylindrical pressure metal fitting 142 toward the space 139 in this order.

The cylindrical pressure metal fitting 142 has on its circumference a male thread 143 formed and engaged with a female thread 144 formed on the wall of the through hole 135.

On the bottom face of the top metal fitting 133 in contact with the head metal fitting 123, an annular groove 145 is formed to fit a sealing member 146 such as an O-ring.

The top metal fitting 133 is fixed by a bracket 147 for fixing the airbag 148, so that it is prevented from coming off.

The bracket 147 is in close contact with the exterior of the annular wall 132 of the head metal fitting 123 and also in contact with the root of the gas exhaust section 134 by an annular fastening claw section 151 at the end.

The airbag 148 is fixed to the head metal fitting 123 and the bracket 147 by screws 150, and fixed to the external cylinder 111, the head metal fitting 123 and the bracket 147 by bolts 149.

On the other hand, a decomposition catalyst vessel 160, a main agent vessel 180 and the pressure cap 190 are provided in this order from the shoulder 114 toward the open end 116 in the external cylinder 111.

The decomposition catalyst vessel 160 has a body 161 which is provided with an external T-shaped cross section and a through hole 162 having a T-shaped cross section at its center and a catalyst 163 for decomposing hydrogen peroxide to be charged into the through hole 162; and the igniter 164 is provided at the rear of the catalyst 163 for decomposing hydrogen peroxide.

The body 161 has a supporting fixture 165 which has almost the same outer diameter with the inner diameter of the inner wall 113 of the external cylinder 111 and a shaft 166 which has almost the same outer diameter with the inner diameter of the cylindrical member 115 of the external cylinder 111.

The supporting fixture 165 has its top and bottom faces provided with an annular groove 167 in which a sealing member 168 such as an O-ring is fitted and an annular groove 169 in which a sealing member 170 such as an O-ring is fitted.

The shaft 166 is longer than the cylindrical member 115 of the external cylinder 111 and protrudes from the cylindrical member 115 of the external cylinder 111 when the decomposition catalyst vessel 160 is fitted. The shaft 166 has a male thread 171 formed.

On the shaft 166 which protrudes from the cylindrical member 115 of the external cylinder 111 when the decomposition catalyst vessel 160 is fitted, a lock nut 172 is threaded and fixed.

The igniter 164 has gunpowder or the like fitted to a heating element which generates heat by flowing a current. As the heating element, a thin film resistor, a nichrome wire or the like can be used for example. And, the gunpowder or the like includes black powder, lead rhodanate, tricinate and the like.

The igniter 164 is fixed by threading a lock nut 174 onto the shaft 166. A leg line 173 is lead out of the lock nut 174.

The igniter 164 is ignited through the leg line 173 by the activation command based on the signal from the acceleration sensor which detects a collision accident or a self-damaging accident.

The catalyst 163 for decomposing hydrogen peroxide is permanganate of alkali metal or alkaline earth metal; chromate of alkali metal gold, platinum, silver or copper; lanthanoid-based oxide; gold powder; platinum powder; silver powder; or copper powder.

On the top of the decomposition catalyst vessel 160, a pressure adjusting plate 175 having a plurality of nozzles 176 is positioned.

And, the pressure adjusting plate 175 is covered by a starter cap 177. The starter cap 177 is also provided with nozzles 178.

The starter cap 177 has on its top the main agent vessel 180 which contains a main agent 181 which is an aqueous solution having a hydrogen peroxide content of 64.5 wt% or below and has a boiling point of 127 °C or below.

The main agent vessel 180 has the main agent 181 charged into a bag made of a synthetic resin such as polyethylene and its top sealed by caulking or heating.

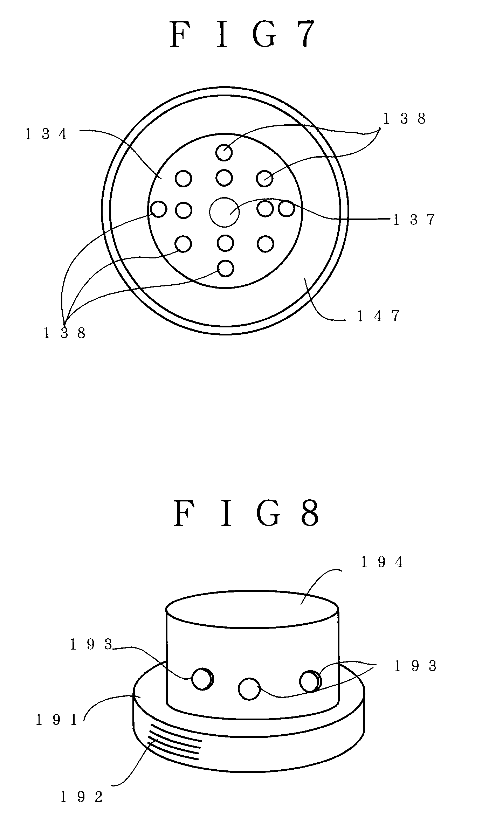

The pressure cap 190 is threaded on the main agent vessel 180. The pressure cap 190 is a cylinder having an inverted T-shaped cross section as shown in Fig. 6 and Fig. 8. A male thread 192 provided on a lower edge 191 so as to be engaged with the female thread 121 formed on the inner wall 113 of the external cylinder 111. A ceiling 194 is sealed and a plurality of exhaust nozzles 193 are formed on the side wall.

Now, assembling of the airbag gas generator according to this example will be described.

First, the decomposition catalyst vessel 160 is inserted into the external cylinder 111 through the shaft 166. Then, the lock nut 172 is threaded onto the shaft 166 which protrudes from the cylindrical member 115 of the external cylinder 111 to securely support and fix the decomposition catalyst vessel 160 on the shoulder 114 within the external cylinder 111.

At this time, the decomposition catalyst vessel 160 already has the catalyst 163 for decomposing hydrogen peroxide and the igniter 64 charged in it. And, the decomposition catalyst vessel 160 has the pressure adjusting plate 175 and the starter cap 177 placed on its top.

Then, the lock nut 174 is threaded on the shaft 166 on the side of the leg line 173 of the igniter to prevent the igniter 164 from falling off. This lock nut 174 serves to securely close the end of the igniter 164 and the end of the shaft 166 of the decomposition catalyst vessel 160.

The leg line 173 protruded from the lock nut 174 is connected to a control (not shown).

The catalyst 163 for decomposing hydrogen peroxide here is a potassium permanganate-based decomposition catalyst, and the igniting agent for the igniter 164 is black powder, boron/potassium nitrate, and ammonium perchlorate-based solid propellant. The black powder is also given a role of quickly dispersing the decomposition catalyst into the aqueous solution of hydrogen peroxide.

Then, the main agent vessel 180, which contains the main agent 181 which is an aqueous solution having a hydrogen peroxide content of 64.5 wt% or below and has a boiling point of 127 °C or below, is positioned on the starter cap 177.

And, on the main agent vessel 180, the pressure cap 190 is fixed by threading the male thread 192 formed on its circumference into the female thread 120 formed on the inner wall 113 of the external cylinder 111.

The opening of the external cylinder 111 is then covered by the head metal fitting 123 and fixed with the bolts 149.

At this time, the head metal fitting 123 has the top metal fitting 133 threaded into its recess 124 and the airbag 148 fitted. And, the bracket 147 is attached to the airbag 148 from above and they are mutually fixed by the screws 150.

Thus, the assembling of the airbag gas generator shown in Fig. 6 is completed.

Now, the operation of this airbag gas generator will be described.

Generally, the main agent vessel 180 is completely sealed, and there is no leak externally under any circumstances. And, since the main agent vessel 180 has its top and bottom fixed by the starter cap 177 and the pressure cap 190, the main agent vessel 180 has no possibility of being displaced by the generation of vibration.

In case of a collision accident or a self-damaging accident, the igniter 164 is ignited through the leg line 173 by the activation command based on the signal from the acceleration sensor which detects the accident, the decomposition catalyst vessel 160 receives the propagated fire, and the main agent vessel 180 is broken by the heat and impact. At the same time, the decomposition catalyst 163 in the decomposition catalyst vessel 160 is dispersed into the external cylinder 111, the dispersed decomposition catalyst 163 comes in contact with hydrogen peroxide, and the hydrogen peroxide starts to decompose to produce water and oxygen gas.

The produced oxygen gas flows through the exhaust nozzles 193 of the pressure cap 190, a space 200 between the pressure cap 190 and the inner wall 113 of the external cylinder 111, and the nozzles 125 of the head metal fitting 123 and into the through hole 135 of the top metal fitting 133.

In the through hole 135, unreacted components are removed by the filter consisting of the porous plates 140, the gauze 141 and the porous plate 140, and the oxygen gas is guided into the space 139 and entered into the airbag 148 through the nozzles 138 of the gas exhaust section 134a.

Thus, the airbag 148 is inflated.

The decomposition rate of hydrogen peroxide is controllable according to the king and amount of the igniting agent, and the kind, particle size and dispersing efficiency into the aqueous solution of the decomposition catalyst.

In this example, it was confirmed in the same way as in Example 1 that 55 ml of the aqueous solution of 60 wt% of hydrogen peroxide was a sufficient amount to instantly inflate a 60-liter airbag.

In this example, the produced gas had the same pressure and temperature curve as the one shown in Fig. 4.

The airbag gas generator of this example was used to check a pressure output property in a prescribed thermal environment, and it was found that the result was the same as that in the pressure increase test at various concentrations shown in Fig. 5.

Example 4:

A practically used airbag was tested for its deployment by using the airbag gas generator described in Example 3.

In the test, the main agent vessel 180 had 70 ml of a sample amount (60 wt% of hydrogen peroxide), the igniter 164 contained 0.2g of black powder in powder and particle forms, 0.6g of boron/potassium nitrate pellets and 0.3g of ammonium perchlorate-based solid propellant, and the catalyst 163 for decomposing hydrogen peroxide was 0.7g of potassium permanganate.

The airbag 148 had a volume of 60 liters, the nozzles 138 of the gas exhaust section 134a had a diameter of 15 mm. The airbag 148 was folded in the same way as the ordinary airbag and had two points fixed by a tape.

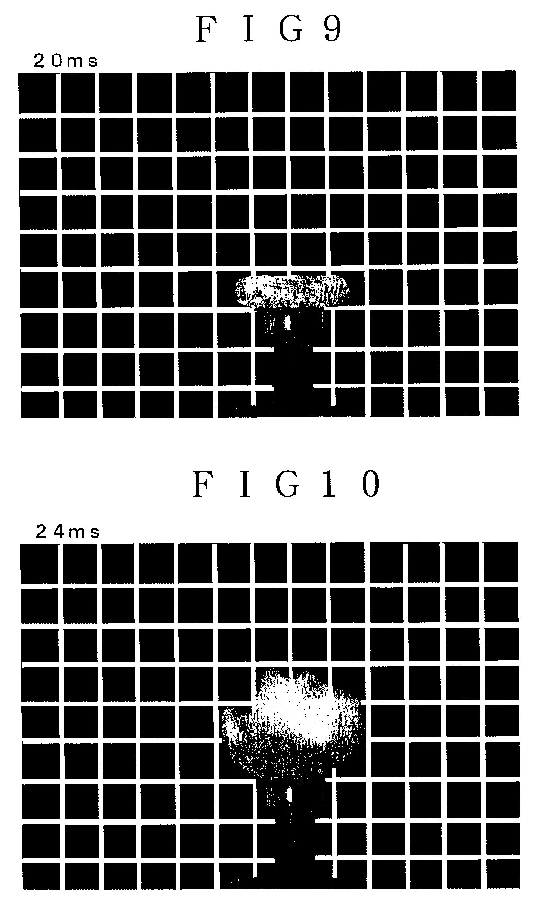

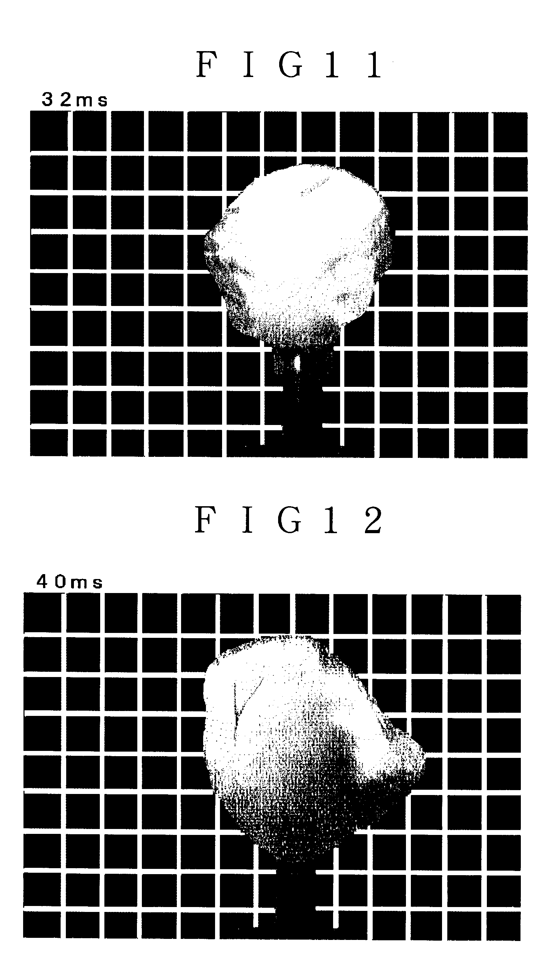

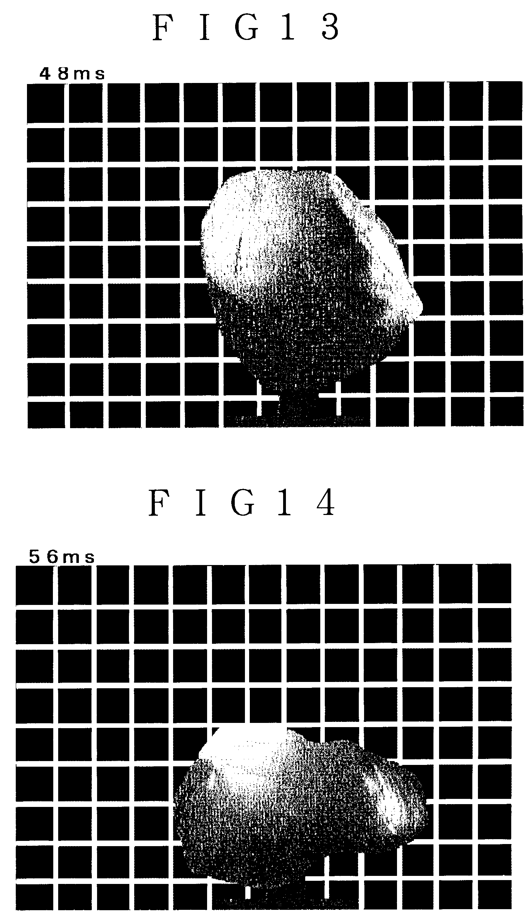

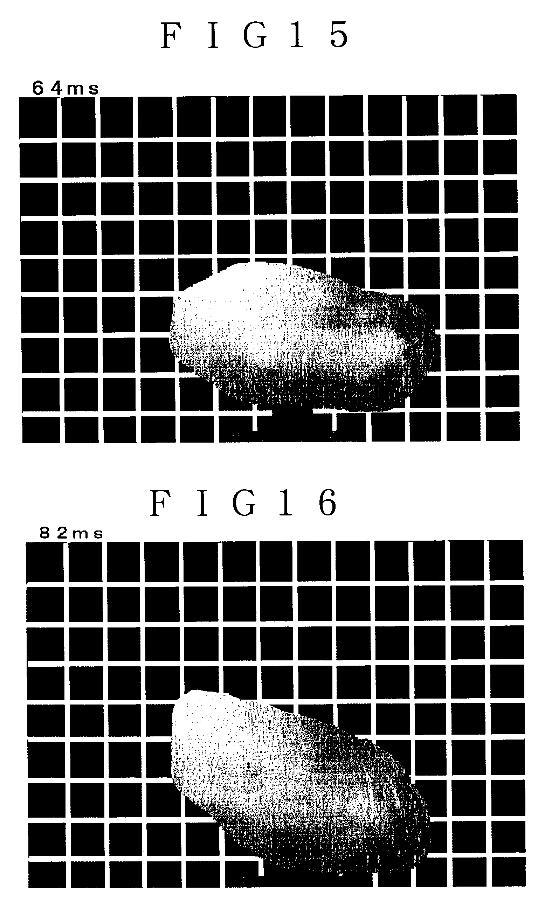

The result is shown in Fig. 9 through Fig. 16.

These figures show the diagrams based on the photographs of the inflating airbag which was recorded by a high-speed video camera which could record 250 frames per second.

Inflation in the vertical direction reached maximum in 32 msec after flowing a current, and the airbag 148 substantially stopped vibrating in 40 msec. The airbag 148 was completely deployed to have a fixed shape in 48 msec to 56 msec, reaching full time.

It was found that the airbag 148 had a stable shape on and after 64 msec, and began to shrivel after the lapse of 100 msec.

After the deployment of the airbag 148, the gas was clean and had no peculiar odor or the like. And, it was not surprising but there was no irritating odor unlike a case that azide of alkali metal was used.

This test proved that the airbag 148 was inflated 90% in 50 msec and the gas generator using hydrogen peroxide could inflate the airbag within the same time as a commercially available airbag gas generator was used.

Example 5:

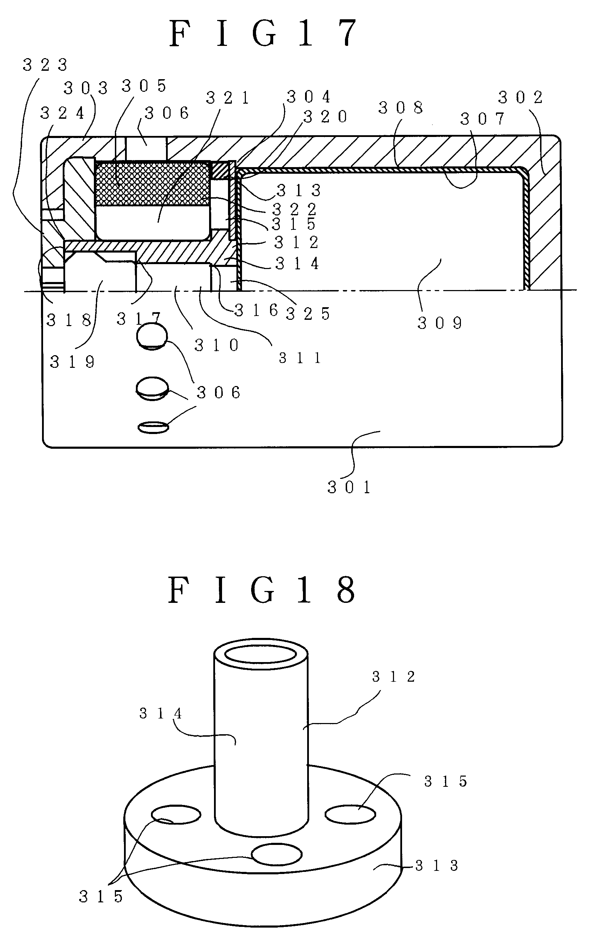

Fig. 17 shows the airbag gas generator according to this example.

In the figure, reference numeral 301 denotes a bottom-closed high-pressure vessel which is an outer body of the gas generator.

The high-pressure vessel 301 has a bottom 302 at one end, but its other end is not closed. The high-pressure vessel 301 is made of, for example, aluminum but can use stainless steel or fiber reinforced plastics. The high-pressure vessel 301 has a shoulder 304 for fixing a rupture disk 320 and another shoulder 305 for fixing an end cap 323 formed on its inner wall.

Gas exhaust ports 306 are formed at equal intervals in the circumferential direction between these shoulders 304 and 305.

Reference numeral 308 denotes a concealed vessel for sealing a decomposable liquid 309 composing a gas-generating agent in it.

The concealed vessel 308 is in contact with the bottom 302 and an inner face 307 of the high-pressure vessel 301.

The concealed vessel 308 is made of aluminum, titanium, stainless steel, fluorine resin such as tetrafluoroethylene resin (PTFE), tetrafluoroethylene-perfluoropropylvinylether copolymer (PFA), tetrafluoroethylene-hexafluoropropylene copolymer (FEP) or monochlorotrifluoroethylene resin (PCTFE), or a synthetic resin such as polyethylene. The concealed vessel 308 is preferably made of pure aluminum which does not contain heavy metal in order to prevent the decomposable liquid 309 from aging with time. It is required to be sealed securely by double-caulking or the like to prevent the contained decomposable liquid 309 from leaking when the inflator is being used.

And, since the fluorine resin (e.g., a trademark Teflon) is effective to prevent the aging with time, it is coated on the inner surface of the concealed vessel 308 which is made of metal. As a matter of course, it is effective to make the concealed vessel 308 with the fluorine resin.

The decomposable liquid 309 can be an aqueous solution of hydrogen peroxide, an aqueous solution of hydroxyl group ammonium nitrate, or a liquid which decomposes to produce gas, and the aqueous solution of hydrogen peroxide is particularly preferable.

To adjust the volume and deploying property of the airbag, it is possible to vary the amount of the decomposable liquid 309 in the concealed vessel 308. But, the decomposable liquid 309 is required to be at least 50% of the inner volume of the concealed vessel 308 because the decomposition reaction does not take place as planned if its amount is extremely small. It is particularly preferable to be 50% to 90% of the inner volume.

Reference numeral 310 denotes a decomposition accelerating substance (catalyst) discharging means.

The decomposition accelerating substance (catalyst) discharging means 310 is formed of a discharging agent and a decomposition accelerating substance (catalyst) which are mixed in a state of power within a container 311. The discharging agent is gunpowder such as black powder or boron/potassium nitrate which is burnt by the high-temperature gas produced from an igniter 319.

When an aqueous solution having a hydrogen peroxide content of 35 wt% to 64.5 wt% is used as the decomposable liquid 309, the decomposition accelerating substance (catalyst) can be permetalate of alkali metal or alkaline earth metal; metalate of alkali metal, gold, platinum, silver or copper; lanthanoid-based oxide; gold powder; platinum powder; silver powder; or copper powder.

Reference numeral 312 denotes a partition member.

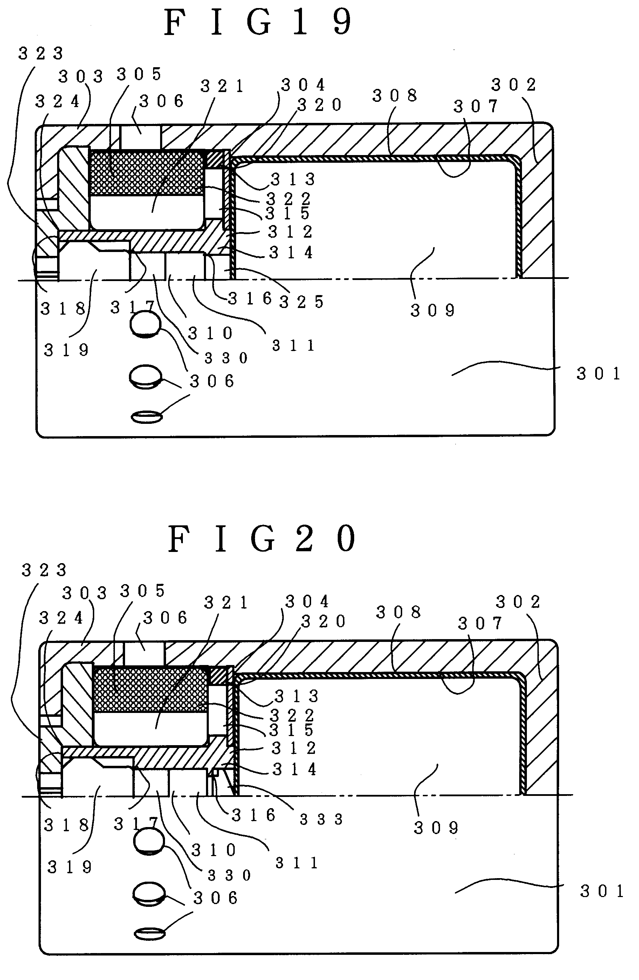

The partition member 312 is made of, for example, aluminum and consists of a flat plate 313 which separates the concealed vessel 308 and a decomposition reaction chamber 321 and a cylindrical column 314 which is positioned at the center of the flat plate 313; and a plurality of gas passages 315 are formed at equal intervals on the flat plate 313 as shown in Fig. 18. The gas passages 315 are provided to have a long route for the gas to flow between the gas passages 315 and the gas exhaust ports 306 formed on the high-pressure vessel 301. An igniter 319 and the decomposition accelerating substance (catalyst) discharging means 310 are disposed within the cylindrical column 314. The decomposition accelerating substance (catalyst) discharging means 310 is contacted and fixed to a shoulder 316 within the cylindrical column 314. The igniter 319 is contacted and fixed to a shoulder 317 within the cylindrical column 314.

The rupture disk 320 is an aluminum annular disk disposed between the concealed vessel 308 having the decomposable liquid 309 sealed in it and the flat plate 313, but may be any material which is generally used as the rupture disk.

The decomposition reaction chamber 321 is an annular space formed by the partition member 312 and the end cap 323.

A mesh structure 322 is provided within the decomposition reaction chamber 321.

The mesh structure 322 is wire gauze or felt made of metal, or a porous body which is used as the decomposition accelerating substance (catalyst) for the decomposable liquid 309. It is desirable to be a copper wire gauze when the decomposable liquid 309 is an aqueous solution of hydrogen peroxide.

It is more effective when a wire rod, which forms the mesh structure 322, is coated with a particulate decomposition accelerating substance (catalyst) for the decomposable liquid 309.

The end cap 323 is caulked inward by the open edge of an end 303 of the high-pressure vessel 301. Thus, a leading end 318 of the partition member 312 is contacted to a shoulder 324 within the end cap 323, the partition member 312 is fixed to the high-pressure vessel 301 via the rupture member 320, and the decomposition accelerating substance (catalyst) discharging means 310 and the igniter 319 can be fixed.

The end cap 323 can be fixed by not only caulking but threading or welding to the opening of the end 303 of the high-pressure vessel 301.

Now, the operation of the gas generator of this example structured as described above will be described.

When a vehicle has a collision, a current flows to the igniter 319 according to the signal from a collision detection sensor (not shown) equipped to the vehicle to activate the igniter 319, and the high-temperature gas is produced from the igniter 319 by the combustion of the igniting agent contained in the igniter 319.

This high-temperature gas ignites the discharging agent disposed in the decomposition accelerating substance (catalyst) discharging means 310. The pressure of the high-temperature gas produced by the combustion of the discharging agent partly breaks the concealed vessel 308 through a space 325 to release the decomposition accelerating substance (catalyst) at a high speed into the decomposable liquid 309. The released decomposition accelerating substance (catalyst) is vigorously stirred by the pressure of the gas produced by the combustion of the discharging agent, and the decomposable liquid 309 is contacted to the decomposition accelerating substance (catalyst) and decomposed.

The decomposable liquid 309 is decomposed by heat from the decomposition accelerating substance (catalyst) and the discharging agent, and when the pressure in the concealed vessel 308 reaches a prescribed value, the concealed vessel 308 and the rupture disk 320 are broken to let the decomposition product gas flow into the decomposition reaction chamber 321. Unreacted production gas is completely decomposed while flowing through the decomposition reaction chamber 321, and the gas is supplied to the airbag through the gas exhaust ports 306 formed on the side wall of the high-pressure vessel 301.

Within the decomposition reaction chamber 321, the mesh structure 322 made of the decomposition accelerating substance (catalyst) or coated with the decomposition accelerating substance (catalyst) can complete the decomposition and filtrate solid products and fragments of the rupture disk 320 produced within the gas generator.

Example 6:

Fig. 19 shows the airbag gas generator according to this example.

In this example, the gas generator is structured in the same way as the one shown in Fig. 17 excepting the decomposition accelerating substance (catalyst) discharging means 310 in Fig. 17. The decomposition accelerating substance (catalyst) discharging means 310 has a discharging agent 330 and a decomposition accelerating substance (catalyst) 331 separately disposed.

Example 7:

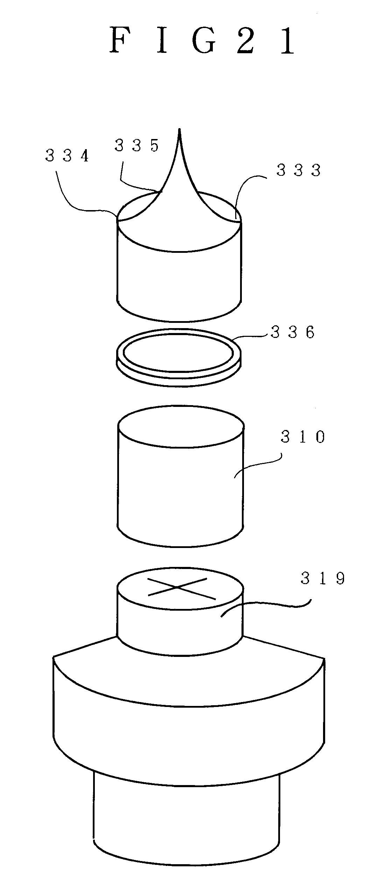

Fig. 20 and Fig. 21 show the airbag gas generator according to this example.

In this example, the gas generator is structured in the same way as the one shown in Fig. 17 excepting the decomposition accelerating substance (catalyst) discharging means 310 in Fig. 17. A metallic rod projectile 333 is provided between the decomposition accelerating substance (catalyst) discharging means 310 and the concealed vessel 308. The metallic projectile 333 is disposed on the shoulder 316 formed on the inner wall of the partition member 312 via an O-ring 336.

The metallic projectile 333 has its end 334 in the shape of a gimlet. A slope 335 of the gimlet-shaped end 334 of the metallic projectile 333 is desired to have a concave shape as shown in Fig. 21.

In this example, since the metallic projectile 333 is provided between the concealed vessel 308 for the decomposable liquid and the decomposition accelerating substance (catalyst) discharging means 310, the metallic projectile 333 provided with a motion energy by the gas produced by the combustion of the discharging agent breaks through the concealed vessel 308,and moves through the decomposable liquid at a high speed. The decomposition reaction is accelerated by stirring performed more effectively because of turbulent flow caused after the passage of the metallic projectile 333, providing a preferable function for the concealed vessel 308 with a larger diameter.

Particularly, when the gimlet-shaped slope 335 from the end 334 of the metallic projectile rod 333 has a concave shape, a stirring effect is remarkably effective to promote the decomposition reaction.

Example 8:

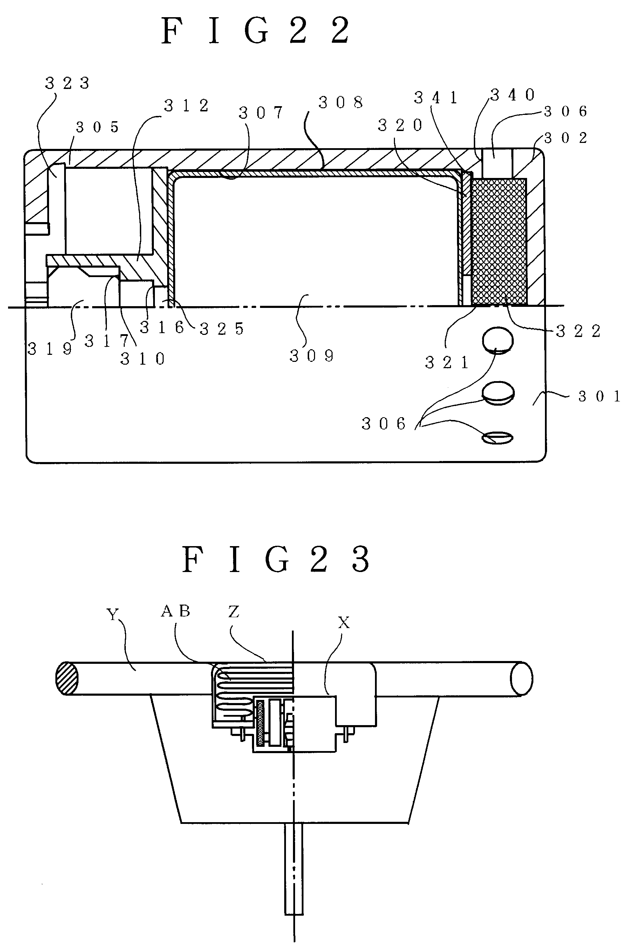

Fig. 22 shows the airbag gas generator according to this example.

In this example, the decomposition reaction chamber 321 is disposed to correspond to the gas exhaust ports 306 formed on the side of the bottom 302 of the high-pressure vessel 301.

Within the high-pressure vessel 301, an annular projection 340 is formed near the gas exhaust ports 306 but on the opposite side from the bottom 302, thereby providing a shoulder 341 for fixing the rupture disk 320.

Since the gas exhaust ports 306 are not formed on the side of the opening of the end 303 of the high-pressure vessel 301, the partition member 312 is not provided with a gas passage.

In this example, the partition member 312 is the same as the one shown in Fig. 17, but the end cap 323 may be made thick so as to have the same function as the cylindrical column 314. In such a case, the partition member 312 is made of an annular flat plate without any gas passage.

And, the decomposition accelerating substance (catalyst) discharging means 310 may have the discharging agent 330 and the decomposition accelerating substance (catalyst) 331 separately disposed like the gas generator shown in Fig. 19.

Besides, the metallic rod projectile 333 may be provided between the decomposition accelerating substance (catalyst) discharging means 310 and the concealed vessel 308 as shown in Fig. 20.

The above respective examples have provided the annular rupture disk 320, but the examples shown in Fig. 17 through Fig. 21 may form it in the gas passages 315.

And, when the strength of the concealed vessel 308 is adjusted, the rupture disk 320 can be omitted.

In addition, the decomposition reaction chamber 321 can omit the mesh structure for decomposing the decomposable liquid if a capacity is available.

The high-pressure vessel 301 is a bottom-closed container, but both ends of the cylinder body may be closed by a cap.

Example 9:

Fig. 23 is a schematic explanatory diagram showing an airbag gas generator X according to the present invention mounted on a steering wheel Y of an automobile. An AB denotes an airbag.

The airbag gas generator X has a structure different from those in the examples shown in Fig. 3 through Fig. 22, but it is shown mounted on a steering post Z of a steering wheel Y.

Example 10:

Using the decomposable gas generator shown in Fig. 17, a 60-liter tank test capable of to analyzing the gas production behavior of an ordinary airbag gas generator was performed.

When the decomposable liquid 309 was 60 cm³ of an aqueous solution of 60 wt% of hydrogen peroxide, the discharging agent was 2.25g of boron/potassium nitrate, the decomposition accelerating substance (catalyst) was 0.3g of potassium permanganate, the metallic projectile 333 was stainless steel having a diameter of 4 mm, the rupture disk 320 was an aluminum plate having a thickness of 1mm, and the mesh structure 322 in the decomposition reaction chamber 321 was made of two overlaid sheets of 40-mesh copper wire gauze which were coated with potassium permanganate passable through 80 mesh, a tank pressure of 100 KPa was obtained in 50 msec as the test result at normal temperature. This result was sufficient to generally deploy the airbag for the driver s seat.

Example 11:

Using the decomposable gas generator shown in Fig. 17, a 60-liter tank test capable of analyzing the gas production behavior of an ordinary airbag gas generator was performed.

When the decomposable liquid 309 was 100 cm³ of an aqueous solution of 60 wt% of hydrogen peroxide, the discharging agent was 2.65g of boron/potassium nitrate, and the decomposition accelerating substance (catalyst) was 0.3g of potassium permanganate, a tank pressure of 250 KPa was obtained in 60 msec. This result was sufficient to generally deploy the airbag for the driver s seat.

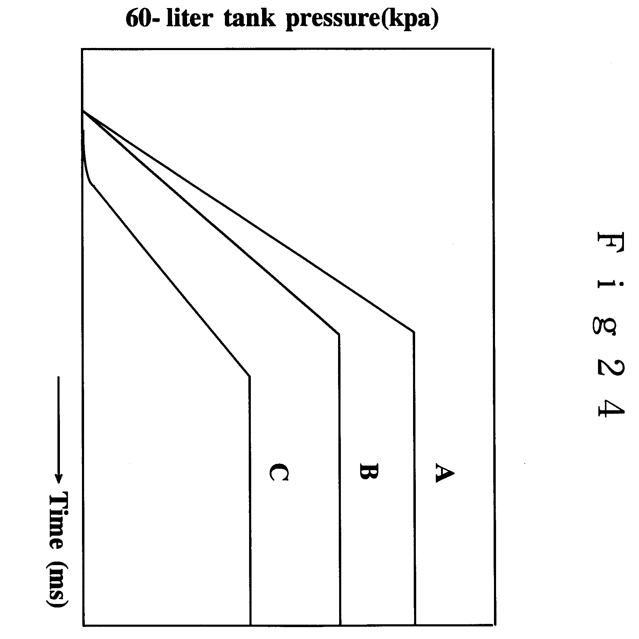

Fig. 24 shows typical tank pressure-time curves which are obtained when the airbag gas generator is tested for its operation in a 60-liter tank.

Curve A shows a tank pressure-time curve indicating an ideal airbag deployment. When an aqueous solution of hydrogen peroxide is used as the gas-generating agent for the gas generator for the driver s seat, the maximum pressure is desired to reach 100 to 150 KPa in 30 to 50 msec. And, when it is used for the front passenger seat, the maximum pressure is desired to reach 200 to 300 KPs in 50 to 70 msec. The curve A was achieved in Examples 10 and 11.

Curve B shows a tank pressure-time curve obtained when the decomposition reaction chamber 321 is omitted. It is seen that a tank pressure cannot be obtained as designed because of insufficient decomposition of hydrogen peroxide.

Curve C shows a tank pressure-time curve when the decomposition accelerating substance (catalyst) discharging means is inappropriate. It is seen that hydrogen peroxide is not decomposed uniformly, the rupture disk 320 is broken with delay to discharge gas and also undecomposed hydrogen peroxide, and a designed tank pressure is not obtained. It is obvious that the airbag does not deploy sufficiently in the cases of the curves B and C.

INDUSTRIAL APPLICABILITY

As described above, according to the invention described in Claims 1 to 11, an airbag system with a long service life assured can be configured by using an aqueous solution containing hydrogen peroxide which does not exceed 64.5 wt% as the main agent, selecting appropriate igniting agent and catalyst, and designing a module which enables quick decomposition of the main agent.

Specifically, the invention described in Claims 1 to 5 has remarkable advantages that combustion (decomposition) products are oxygen and steam only by utilizing the properties of hydrogen peroxide quite harmless to human beings, and disadvantages in practical use have been remedied.

Therefore, a temperature of gas coming out of the gas generator which uses the aqueous solution containing hydrogen peroxide which does not exceed 64.5 wt% rises substantially because of a pressure increase but up to 251 °C, and there is no possibility of burning a fabric airbag material by the decomposition product unlike a case using another gas-generating agent.

And, no flame is produced and the airbag surface has a low temperature of about 167 °C, so that no burn is caused by steam and oxygen of the decomposition gas.

Besides, according to the invention described in claims 12 to 29, to protect the occupant if a vehicle cause a collision, a decomposable liquid can be decomposed instantly and completely by an inexpensive method as a technical means for deploying the airbag instantly as designed.

In other words, a chemical decomposition accelerating substance (catalyst) separately disposed from the decomposable liquid placed in a concealed vessel is contacted with the decomposable liquid uniformly and instantaneously, and the decomposable liquid which is partly undecomposed but discharged from the concealed vessel can be decomposed completely within a decomposition reaction chamber.

Accordingly, there can be provided an airbag gas generator which does not produce an undecomposed substance because a decomposition rate of the decomposable liquid is remarkably improved and it is completely decomposed in 50 to 60 msec.

**Claims**

1. An airbag gas-generating agent comprising a main agent which is an aqueous solution having a hydrogen peroxide content of 64.5 wt% or below and having a boiling point of 127 °C or below and a decomposition catalyst for hydrogen peroxide.

2. The airbag gas-generating agent according to Claim 1, wherein said main agent is an aqueous solution having a hydrogen peroxide content of 35 wt% to 64.5 wt%.

3. The airbag gas-generating agent according to Claim 1, wherein said main agent is an aqueous solution having a hydrogen peroxide content of 40 wt% to 60 wt%.

4. The airbag gas-generating agent according to Claim 1, wherein said decomposition catalyst for hydrogen peroxide is permanganate of alkali metal or alkaline earth metal; chromate of alkali metal, gold, platinum, silver or copper; lanthanoid-based oxide; gold powder; platinum powder; silver powder; or copper powder.

5. An airbag gas generator comprising a main agent vessel accommodating a main agent which is an aqueous solution having a hydrogen peroxide content of 64.5 wt% or below and having a boiling point of 127 °C or below, a decomposition catalyst vessel accommodating a decomposition catalyst for hydrogen peroxide, and an igniter mounted into said decomposition catalyst vessel.

6. An airbag gas generator comprising a main agent vessel accommodating a main agent which is an aqueous solution having a hydrogen peroxide content of 64.5 wt% or below and having a boiling point of 127 °C or below, a decomposition catalyst vessel accommodating a decomposition catalyst for hydrogen peroxide, an igniter mounted into said decomposition catalyst vessel, and a gas generator body which has said igniter, decomposition catalyst vessel and main agent vessel in this order and a gas exhaust section provided at the upper part of said main agent vessel.

7. The airbag gas generator according to Claim 5 or 6, wherein said main agent is an aqueous solution having a hydrogen peroxide content of 35 wt% to 64.5 wt%.

8. The airbag gas generator according to Claim 5 or 6, wherein said main agent is an aqueous solution having a hydrogen peroxide content of 40 wt% to 60 wt%.

9. The airbag gas generator according to Claim 5 or 6, wherein said decomposition catalyst for hydrogen peroxide is permanganate of alkali metal or alkaline earth metal; chromate of alkali metal, gold, platinum, silver or copper; lanthanoid-based oxide; gold powder; platinum powder; silver powder; or copper powder.

10. The airbag gas generator according to Claim 5 or 6, wherein said igniter comprises a heating element and gunpowder attached to said heating element.

11. The airbag gas generator according to Claim 6, wherein a pressure member having exhaust nozzles is disposed between the main agent vessel and the gas exhaust section.

12. An airbag gas generator utilizing decomposition of a liquid comprising:

    a high-pressure vessel having gas exhaust ports to the airbag formed on its wall, a concealed vessel with a decomposable liquid concealed in it, a decomposition accelerating substance discharging means, and an igniter; the concealed vessel, the decomposition accelerating substance discharging means and the igniter being positioned in the high-pressure vessel, and a decomposition reaction chamber being positioned between the concealed vessel and the gas exhaust ports.

13. An airbag gas generator utilizing decomposition of a liquid comprising:

    a high-pressure vessel having gas exhaust ports to the airbag formed on its wall, a concealed vessel with a decomposable liquid concealed in it, a decomposition accelerating substance discharging means, a rupture disk which is disposed between the concealed vessel and the decomposition accelerating substance discharging means, and an igniter; the concealed vessel, the rupture disk, the decomposition accelerating substance discharging means and the igniter being positioned in the high-pressure vessel, and a decomposition reaction chamber being positioned between the concealed vessel and the gas exhaust ports via the rupture disk.

14. An airbag gas generator utilizing decomposition of a liquid comprising:

    a bottom-closed high-pressure vessel having gas exhaust ports to the airbag formed on its wall on the side of an open end, a concealed vessel with a decomposable liquid concealed in it, a decomposition accelerating substance discharging means, a rupture disk which is disposed between the concealed vessel and the decomposition accelerating substance discharging means, an igniter, a partition member which has gas passages and a space in which the decomposition accelerating substance discharging means and the igniter are fitted, and

an end cap which is provided on the open side of the high-pressure vessel; the high-pressure vessel having the concealed vessel, the rupture disk, the partition member, the decomposition accelerating substance discharging means, the igniter and the end cap disposed in it, a decomposition reaction chamber being formed between the gas passages and the gas exhaust ports via the rupture disk, and the open end of the high-pressure vessel being fixed with the end cap.

15. An airbag gas generator utilizing decomposition of a liquid comprising:

a bottom-closed high-pressure vessel having gas exhaust ports to the airbag formed on its wall on the side of the bottom, a decomposition reaction chamber formed on the side of the bottom of the high-pressure vessel, a concealed vessel with a decomposable liquid concealed in it, a rupture disk provided between the decomposition reaction chamber and the concealed vessel, a decomposition accelerating substance discharging means, an igniter, a partition member which separates the decomposition accelerating substance discharging means and the igniter from the concealed vessel, and an end cap which is provided on the open side of the high-pressure vessel; the high-pressure vessel having the rupture disk, the concealed vessel, the partition member, the decomposition accelerating substance discharging means, the igniter and the end cap disposed in it, and the open end of the high-pressure vessel being fixed with the end cap.

16. The airbag gas generator according to any one of Claims 12 through 15, wherein the high-pressure vessel is aluminum, stainless steel or fiberglass reinforced plastics.

17. The airbag gas generator according to any one of Claims 12 through 15, wherein the decomposable liquid is an aqueous solution of hydrogen peroxide or an aqueous solution of hydroxyl group ammonium nitrate.

18. The airbag gas generator according to Claim 17, wherein the aqueous solution of hydrogen peroxide is an aqueous solution of 35 wt% to 64.5 wt% of hydrogen peroxide.

19. The airbag gas generator according to any one of Claims 12 through 15, wherein the decomposition accelerating substance is permetalate of alkali metal or alkaline earth metal; metalate of alkali metal, gold, platinum, silver or copper; lanthanoid-based oxide; gold powder; platinum powder; silver powder; or copper powder.

20. The airbag gas generator according to Claim 19, wherein the permetalate of alkali metal is potassium permanganate.

21. The airbag gas generator according to any one of Claims 12 through 15, wherein the decomposition reaction chamber accommodates a mesh structure which is formed of a wire rod for decomposing the decomposable liquid.

22. The airbag gas generator according to Claim 21, wherein the wire rod is palladium, gold, platinum, silver, copper, iron or stainless steel.

23. The airbag gas generator according to Claim 21, wherein the wire rod is coated with the decomposition accelerating substance described in Claim 19.

24. The airbag gas generator according to any one of Claims 12 through 15, wherein the decomposition accelerating substance discharging means contains the decomposition accelerating substance and the discharging agent.

25. The airbag gas generator according to any one of Claims 12 through 15, wherein the decomposition accelerating substance discharging means has a metallic projectile.

26. The airbag gas generator according to Claim 25, wherein the metallic projectile has a gimlet-shaped end and its slope has a concave shape.

27. The airbag gas generator according to any one of Claims 12 through 15, wherein the concealed vessel is aluminum, titanium, stainless steel, or a synthetic resin containing fluorine resin.

28. The airbag gas generator according to Claim 27, wherein the inner surface of the concealed vessel is coated with fluorine resin.

29. The airbag gas generator according to any one of Claims 12 through 15, wherein the decomposable liquid in the concealed vessel is at least 50% of the inner volume of the concealed vessel.

# F I G 1

**Hydrogen peroxide decomposed gas properties**

# F I G 2

Basic physical properties of aquwous solution of hydrogen peroxide

# F I G 3

# F I G 4

Pressure and temperature increase test by 3- liter combustor

(Sample: 55 ml aqueous solution of 60 wt% of $H_2O_2$)

# F I G 5

Pressure increase test by 3- liter combustor(- 30 ℃)

(Sample: 55 ml aqueous solution of 30 wt% of $H_2O_2$, aqueous solution of 60 wt% of $H_2O_2$)

# F I G 6

# F I G 7

134
138
137
138
147

# F I G 8

194
193
193
191
192

# F I G 9

# F I G 1 0

# F I G 1 1

32ms

# F I G 1 2

40ms

# F I G 1 3

4 8 m s

# F I G 1 4

5 6 m s

# FIG 15

# FIG 16

# F I G 1 7

323
303 305
324 306 321 304 302
320 308 307

313
322
315
312
314

318 317 316 325 309
319 310 311

306

301

# F I G 1 8

312
314
315

315 313

# FIG19

323
303 305
324 306 321 304 308 302
320 307

313
322
315
312
314

318 317 316 325
319 310 309
330 311

306 301

# FIG20

323
303 305
324 306 321 304 308 302
320 307

313
322
315
312
314

318 317 316 333
319 310 309
330 311

306 301

# F I G 2 1

# F I G 2 2

# F I G 2 3

# F i g 2 4

EP 0 757 975 A1

# INTERNATIONAL SEARCH REPORT

International application No.

PCT/JP96/00423

| A. CLASSIFICATION OF SUBJECT MATTER |
|---|
| Int. Cl$^6$  C06D5/00, B60R21/26 |
| According to International Patent Classification (IPC) or to both national classification and IPC |

| B. FIELDS SEARCHED |
|---|
| Minimum documentation searched (classification system followed by classification symbols) |
| Int. Cl$^6$  C06D5/00, B60R21/26 |
| Documentation searched other than minimum documentation to the extent that such documents are included in the fields searched |
| Electronic data base consulted during the international search (name of data base and, where practicable, search terms used) |

## C. DOCUMENTS CONSIDERED TO BE RELEVANT

| Category* | Citation of document, with indication, where appropriate, of the relevant passages | Relevant to claim No. |
|---|---|---|
| X<br>A | JP, 56-88804, A (Toshiba Ray. O. Back K.K.),<br>July 18, 1981 (18. 07. 81),<br>Claims 1 to 3, 5, line 1, upper left column,<br>page 2 to line 11, upper left column, page 3,<br>drawings (Family: none) | (1)<br>(2)-(29) |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| March 19, 1996 (19. 03. 96) | April 16, 1996 (16. 04. 96) |

| Name and mailing address of the ISA/ | Authorized officer |
|---|---|
| Japanese Patent Office | |
| Facsimile No. | Telephone No. |

Form PCT/ISA/210 (second sheet) (July 1992)

33